(19) **Europäisches Patentamt**
**European Patent Office**
**Office européen des brevets**

(11) **EP 1 660 984 B1**

(12) **FASCICULE DE BREVET EUROPEEN**

(45) Date de publication et mention
de la délivrance du brevet:
**11.08.2010 Bulletin 2010/32**

(51) Int Cl.:
***G06F 3/042*** *(2006.01)*

(21) Numéro de dépôt: **04787300.5**

(22) Date de dépôt: **02.09.2004**

(86) Numéro de dépôt international:
**PCT/FR2004/002245**

(87) Numéro de publication internationale:
**WO 2005/024621 (17.03.2005 Gazette 2005/11)**

(54) **PROCEDE ET DISPOSITIF DE DETECTION OPTIQUE DE LA POSITION D'UN OBJET PAR MESURE DE LA LUMIERE REFLECHIE PAR CET OBJET**

VERFAHREN UND EINRICHTUNG ZUR OPTISCHEN DETEKTION DER POSITION EINES OBJEKTS DURCH MESSUNG DES VON DIESEM OBJEKT REFLEKTIERTEN LICHTS

METHOD AND DEVICE FOR OPTICALLY DETECTING THE POSITION OF AN OBJECT BY MEASURING THE LIGHT REFLECTED BY THIS OBJECT

(84) Etats contractants désignés:
**AT BE BG CH CY CZ DE DK EE ES FI FR GB GR HU IE IT LI LU MC NL PL PT RO SE SI SK TR**

(30) Priorité: **02.09.2003 FR 0310378**

(43) Date de publication de la demande:
**31.05.2006 Bulletin 2006/22**

(73) Titulaire: **H2I Technologies**
**30900 Nîmes (FR)**

(72) Inventeurs:
• **CAVALLUCCI, Gilles**
**F-30000 Nimes (FR)**
• **SYLVESTRE, Julien, P.**
**F-30000 Nimes (FR)**
• **PLANTIER, Philippe, G.**
**F-30900 Nimes (FR)**

(74) Mandataire: **Domange, Maxime**
**Cabinet Beau de Lomenie**
**232, avenue du Prado**
**13295 Marseille Cedex 08 (FR)**

(56) Documents cités:
**EP-A- 0 316 972          EP-A- 1 039 365**
**US-A1- 2003 006 973**

**Description**

L'invention est relative à un procédé et à un dispositif pour déterminer la position d'un objet sur une zone déterminée d'une surface, en particulier, mais non exclusivement, pour permettre la saisie de données.

Un domaine technique de l'invention est celui de la fabrication des claviers et des dispositifs similaires permettant une entrée manuelle de données pour ordinateurs, téléphones fixes ou mobiles, PDA, ou tout autre appareil électronique.

Il existe de nombreux systèmes optiques utilisés pour détecter la position d'un organe ou objet en vue de la saisie de données, en particulier de données alphanumériques.

Le brevet FR 2 443 173 décrit un clavier à touches mobiles comportant une pluralité d'émetteurs de lumière et une pluralité de récepteurs de lumière permettant de détecter l'enfoncement des touches ; ce clavier est coûteux, car il nécessite un grand nombre de composants mécaniques et optoélectroniques ; il est en outre complexe du fait de la dissémination d'émetteurs et récepteurs de lumière dans toute la zone où sont situées les touches.

Plus récemment ont été développés des dispositifs statiques de saisie de données.

Le brevet US-A-4,986,662 décrit un système similaire au précédent où les sources sont placées au foyer d'un réflecteur parabolique, afin de diminuer le nombre de composants optoélectroniques.

Un inconvénient de ces dispositifs résulte du fait qu'ils nécessitent de disposer les composants optiques de façon sensiblement répartie sur tout le pourtour de la zone de saisie, et avec une précision géométrique suffisante pour ne pas fausser les calculs effectués à partir des données représentatives des signaux délivrés par les récepteurs de lumière, pour déterminer la position, dans la zone de saisie, de l'objet (doigt ou autre) qui sert à déterminer la donnée choisie par l'utilisateur. Il en résulte que ces dispositifs restent relativement coûteux.

En outre, un dispositif conçu pour une surface de taille donnée, ne s'adaptera pas facilement à une surface de taille différente.

Le document EP 1 039 365 décrit un clavier virtuel comportant des transducteurs de lumière infrarouge adaptés à déterminer la distance d'un objet (doigt, stylet) par mesure de l'atténuation d'une lumière réfléchie sur cet objet.

Plus précisément, cette méthode repose sur le traitement du signal reçu par le transducteur avec le maximum d'énergie (les signaux reçus par les autres transducteurs n'étant pas traités) selon une loi inversement proportionnelle au carré de la distance séparant l'objet de ce récepteur.

Cette valeur est ensuite divisée en intervalles puis discrétisée, chacun de ces intervalles correspondant à une ligne du clavier virtuel.

Cette méthode présente un premier inconvénient en ce qu'elle ne permet pas de détecter précisément la position d'un objet dès que celui-ci n'est pas parfaitement aligné avec le récepteur infrarouge.

Elle présente aussi un deuxième inconvénient en ce qu'elle ne permet pas d'obtenir la position précise d'un objet de forme irrégulière (comme un doigt par exemple), même si celui-ci est aligné avec un détecteur, notamment par le fait que le signal reçu, après réflexion sur une telle forme, était loin d'être linéaire.

Naturellement, une solution à ce problème consiste à augmenter le nombre de transducteurs, au détriment du coût et de la complexité du dispositif.

Le document EP 1 168 233 décrit un dispositif de détection optique analysant le signal réfléchi grâce à un réseau de neurones.

Cette méthode présente un premier inconvénient en ce qu'elle nécessite un grand nombre d'échantillons pour entraîner le réseau de neurones.

En effet, si le réseau de neurones est entraîné avec un nombre relativement faible d'échantillons (par rapport au nombre de neurones), le résultat de l'interpolation réalisée par ce réseau de neurones ne sera fiable que pour détecter des objets dans les conditions des échantillons précités, mais difficilement prévisible et très incertaine dès que les conditions de mesure s'éloigneront des conditions d'entraînement.

Au surplus, l'exécution du réseau de neurones dans un système embarqué requiert une consommation de ressources de calcul préjudiciable.

L'invention permet de résoudre les problèmes précités. A cet effet, et selon un premier aspect, l'invention vise un procédé de détection optique pour déterminer la position d'un objet sur une zone déterminée de détection d'une surface, ce procédé comportant :

- une étape préliminaire de disposition, à proximité de la zone de détection, et d'un même côté par rapport à l'objet, d'une pluralité d'émetteurs (Ei) et de récepteurs (Ri) de lumière pour couvrir la zone de détection, chaque émetteur étant adapté à émettre la lumière de sorte qu'elle ne rencontre pas la surface dans la zone de détection ; le procédé comportant :
- une étape au cours de laquelle on effectue, pour au moins deux couples émetteur - récepteur, une mesure, par ce récepteur, de la quantité de lumière réfléchie par l'objet, lorsque celui-ci est éclairé par l'émetteur ;
- une étape de calcul d'au moins deux valeurs caractéristiques à partir de ces valeurs mesurées ; et
- une étape de détermination d'au moins une position de l'objet, par lecture directe dans une table indexée par ces valeurs caractéristiques, le contenu de ladite table étant prédéterminé et fixé avant l'étape de mesures,

le procédé étant tel qu'on dispose, au cours de ladite étape préliminaire de disposition, alternativement et régulièrement la pluralité d'émetteurs et de récepteurs, et en on calcule une valeur caractéristique par émetteur en faisant la moyenne des valeurs mesurées par les deux récepteurs situés de chaque côté de cet émetteur, lorsque seul cet émetteur est allumé. On dira que dans ce cas, un émetteur est associé à deux récepteurs de lumière.

Ainsi, la détection d'une position de l'objet est déterminée en utilisant au moins deux mesures réalisées par deux couples émetteur-récepteur différents.

Cette méthode permet d'obtenir une détection beaucoup plus fiable que lorsqu'on analyse uniquement le signal reçu par le transducteur avec le maximum d'énergie, notamment lorsque l'objet à détecter n'est pas aligné avec un transducteur.

Cette méthode évite ainsi de multiplier le nombre d'émetteurs et de récepteurs.

Au surplus, la Demanderesse s'est aperçue, que cette double mesure permet de s'affranchir du caractère non-linéaire du signal réfléchi, et améliore considérablement la détection d'un objet de forme irrégulière.

Par ailleurs, l'utilisation de valeurs caractéristiques pour indexer la table de positions, permet de réduire considérablement la taille de la mémoire nécessaire au stockage de cette table, et le nombre de mesures nécessaires à la construction de cette table.

A ce sujet, la Demanderesse s'est aperçue du fait qu'en pratique, deux ou trois valeurs caractéristiques étaient suffisantes pour détecter la position d'un appui sur une touche de clavier, lorsqu'un émetteur (respectivement récepteur) est associé à deux récepteurs (respectivement émetteurs).

Par ailleurs, la position de l'objet dans la zone de détection s'obtient directement par lecture de la table de positions à partir des valeurs caractéristiques.

La méthode de détection selon l'invention est donc beaucoup plus simple, qu'une méthode basée sur l'utilisation d'un réseau de neurones.

Dans une variante de réalisation, on calcule une valeur caractéristique par récepteur en faisant la moyenne des valeurs mesurées par ce récepteur, lorsque les émetteurs situés de chaque côté du récepteur sont allumés successivement. On dira que dans ce cas, un récepteur est associé à plusieurs émetteurs de lumière.

Les deux variantes de réalisation présentées sont avantageuses d'une part car ces valeurs caractéristiques sont peu sensibles au bruit ambiant et, d'autre part, car elles permettent la détection de la position d'un objet de forme irrégulière.

Dans un autre mode de réalisation, on calcule une valeur caractéristique par émetteur en calculant une fonction des valeurs mesurées par au moins trois récepteurs, lorsque seul cet émetteur est allumé, les coefficients de cette fonction affine étant fonction de la distance séparant chaque récepteur de cet émetteur.

Préférentiellement, on répète, pour chacun des couples émetteur - récepteur, l'étape de mesure jusqu'à mesurer une quantité de lumière réfléchie stable.

Cette précaution supplémentaire permet avantageusement de s'affranchir du bruit ambiant qui pourrait intervenir pendant une mesure isolée.

L'homme du métier comprendra, que lorsque l'on souhaite détecter le mouvement d'un objet, en plus de sa position, cette étape de stabilisation ne sera mise en oeuvre que pendant une durée compatible avec la vitesse de déplacement de l'objet.

Dans un mode préféré de réalisation, la table de positions prédéterminée est obtenue par une méthode de régression polynomiale à partir d'un nombre de mesures préliminaires effectuées dans les mêmes conditions que l'étape de mesure.

Cette méthode permet avantageusement de limiter encore le nombre de mesures nécessaires à la réalisation de la table.

Par conditions de mesure identiques, l'homme du métier comprendra que l'on entend ici, même type d'objet, mêmes types d'émetteurs, de récepteurs, même agencement de ces différents éléments, ...

Préférentiellement, la surface sur laquelle s'effectue la détection étant sensiblement plane, on dispose les émetteurs et les récepteurs sur une ligne unique, ces éléments ayant un axe d'émission, respectivement de réception sensiblement parallèle à ladite zone de détection déterminée.

Grâce au fait que l'ensemble d'émetteurs et récepteurs est disposé sur une ligne unique, du même côté de l'objet, la détection de la position d'un objet peut s'adapter sur une zone de taille quelconque.

Avantageusement, la lumière émise par les émetteurs de lumière est de la lumière ordinaire non cohérente.

La longueur d'onde de la lumière émise peut être dans une plage de longueurs d'ondes parmi les plages suivantes : UV, visible, et infrarouge, les émetteurs et récepteurs utilisés étant alors moins complexes et onéreux que les émetteurs/récepteurs de lumière cohérente (laser) ou électromagnétiques.

Dans un mode de réalisation préféré de l'invention, la zone déterminée comporte un ensemble de zones élémentaires, chacune étant associée à une fonction donnée, de sorte que toute position de l'objet dans une zone élémentaire active la fonction associée à cette zone élémentaire.

L'invention peut ainsi être utilisée pour détection la position d'un objet de contrôle d'un clavier virtuel (doigt, stylet) dans lequel chaque touche du clavier correspond à une zone élémentaire au sens de l'invention.

Selon un mode particulier de l'invention, la zone déterminée est rectangulaire et l'ensemble d'émetteurs et récepteurs de lumière peut être disposé à proximité d'un seul côté de ladite zone rectangulaire.

Cette configuration permet d'optimiser le nombre de zones élémentaires.

Corrélativement, l'invention vise aussi un dispositif de détection optique pour déterminer la position d'un objet sur une zone déterminée de détection d'une surface, ce dispositif comportant, disposés à proximité de la zone déterminée, et d'un même côté par rapport à l'objet, une pluralité d'émetteurs ($E_i$) adaptés à emettre de la lumièere de sorte qu'elle ne rencontre pas ladite surface (1) dans la zone de détection (3) et de récepteurs (Ri) de lumière pour couvrir ladite zone de détection (3), et adaptés à mesurer une valeur représentative de la quantité de lumière réfléchie par l'objet (5). , ce dispositif comportant un moyen de contrôle pour allumer l'émetteur, et un moyen de traitement adapté à :

- obtenir et mémoriser, pour au moins deux couples émetteur - récepteur distincts, la quantité de lumière réfléchie par l'objet et mesurée par le récepteur lorsque l'objet est allumé par l'émetteur ;
- calculer au moins deux valeurs caractéristiques à partir des valeurs mesurées ; et à
- déterminer au moins une position de l'objet, par lecture directe dans une table indexée par ces valeurs caractéristiques, le contenu de cette table étant prédéterminé et fixé avant l'obtention des quantités de lumière, la pluralité d'émetteurs et de récepteurs disposés alternativement et régulièrement, et lesdits moyens de traitement calculent une valeur caractéristique par émetteur, en faisant la moyenne des valeurs mesurées par les récepteurs situés de chaque côté dudit émetteur lorsque seul ledit émetteur est allumé.

Dans une variante, une pluralité d'émetteurs et de récepteurs sont disposés alternativement et régulièrement, et lesdits moyens de traitement calculent une valeur caractéristique par récepteur en faisant la moyenne des valeurs mesurées par ce récepteur, lorsque les émetteurs situés de chaque côté dudit récepteur sont allumés successivement.

La zone déterminée peut comporter un ensemble de zones élémentaires, chacune étant associée à une fonction donnée, de sorte que toute position de l'objet dans une zone élémentaire permet l'activation de la fonction associée à cette zone élémentaire.

La zone déterminée peut correspondre à une zone de saisie et chacune des zones élémentaires peut correspondre à une touche.

L'invention vise aussi un terminal de saisie de données comportant un dispositif de détection optique selon les caractéristiques ci-dessus.

L'invention sera mieux comprise à la lecture de la description faite ci-après, à titre indicatif mais non limitatif, en référence aux dessins annexés sur lesquels :

- la figure 1 illustre très schématiquement un dispositif de détection optique d'un objet sur une zone déterminée d'une surface selon l'invention ;
- les figures 2a à 2c illustrent différents agencements d'émetteurs et de récepteurs pouvant être utilisés dans le dispositif de détection de la figure 1;
- la figure 3 illustre un mode particulier de réalisation du dispositif selon l'invention ;
- la figure 4 est un organigramme montrant le principe de détection optique d'un objet sur une zone déterminée d'une surface selon le dispositif de la figure 3 ;
- la figure 5 illustre une zone de détermination selon l'exemple de la figure 3.
- la figure 6 illustre une zone déterminée comportant des zones élémentaires selon la figure 1 ; et
- la figure 7 illustre une variante de la figure 1.

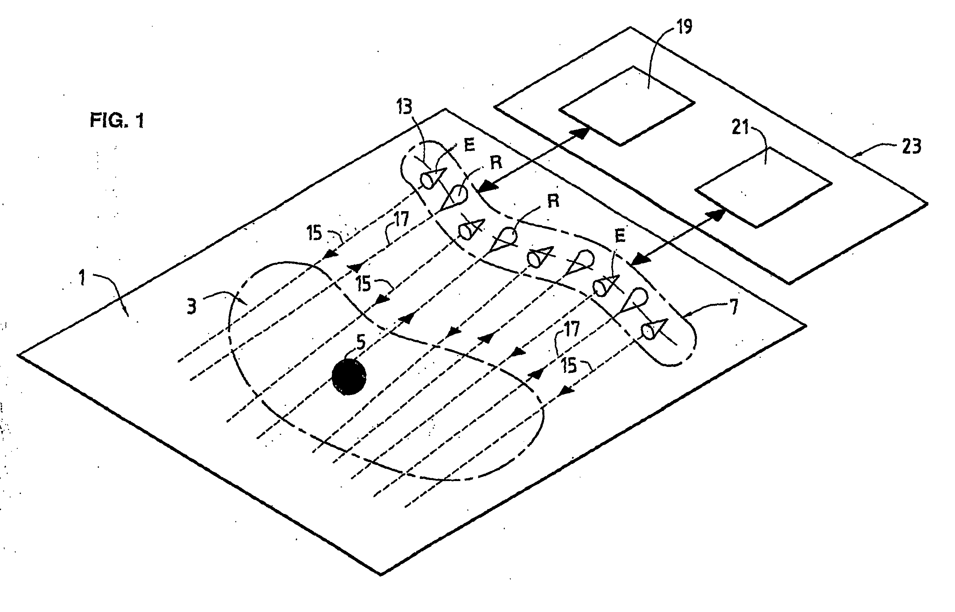

Conformément à l'invention, la **figure 1** illustre une surface 1 comportant une zone déterminée 3 sur la quelle doit se faire la détection d'un objet 5.

En effet, l'invention s'applique en particulier à la détermination de la position d'un objet 5 tel qu'un doigt d'un utilisateur, ou bien d'un outil pour écrire ou pointer tel qu'un stylo, qui est approché ou mis en contact avec la zone déterminée 3.

Ainsi, cette zone déterminée 3 qui correspond à une zone de détection peut être de forme et taille quelconques.

Par ailleurs, un ensemble alterné 7 d'émetteurs E et récepteurs R de lumière est disposé à proximité de la zone déterminée 3, tous du même côté par rapport à l'objet 5, les émetteurs E émettant une lumière qui couvre l'intégralité de cette zone 3.

Dans le mode de réalisation décrit ici, la surface 1 est sensiblement plane.

Mais ceci est facultatif, du moment que la lumière émise par les émetteurs E n'est pas interceptée par la surface 1 dans la zone de détection 3,

Dans l'exemple de la figure 1, les émetteurs E et récepteurs R sont disposés sur une ligne 13 unique.

Avantageusement, il n'est pas nécessaire que la lumière émise soit cohérente du type laser et elle peut être de la lumière ordinaire dans le domaine de l'infrarouge, du visible ou de l'ultraviolet.

Les récepteurs R du type optoélectroniques, sont sensibles à la lumière émise par les émetteurs E et couvrent aussi la zone déterminée 3.

Dans le mode de réalisation décrit ici, chaque émetteur E et récepteur R de lumière a son axe d'émission 15, respectivement de réception 17 sensiblement parallèle à la zone déterminée 3, de sorte que l'ensemble 7 d'émetteurs E et récepteurs R opèrent de manière optimale dans un plan parallèle à cette zone 3.

Dans le mode préféré de réalisation décrit ici, les émetteurs E de lumière sont allumés indépendamment les uns des autres, pas nécessairement de manière successive. Ainsi, pour chaque émetteur E allumé, le signal lumineux reçu par au moins un récepteur R peut être mesuré.

Dans la suite de la description on notera V(Ei, Rj), la quantité de lumière réfléchie par l'objet 5 et mesurée par le récepteur Rj lorsque seul l'émetteur Ei est allumé.

A cet effet, la figure 1 montre un moyen de contrôle 19 pour allumer les émetteurs E et un moyen de traitement 21 pour mesurer les signaux reçus par les récepteurs R

Les moyens de contrôle 19 et de traitement 21 peuvent être intégrés dans une même unité de commande 23.

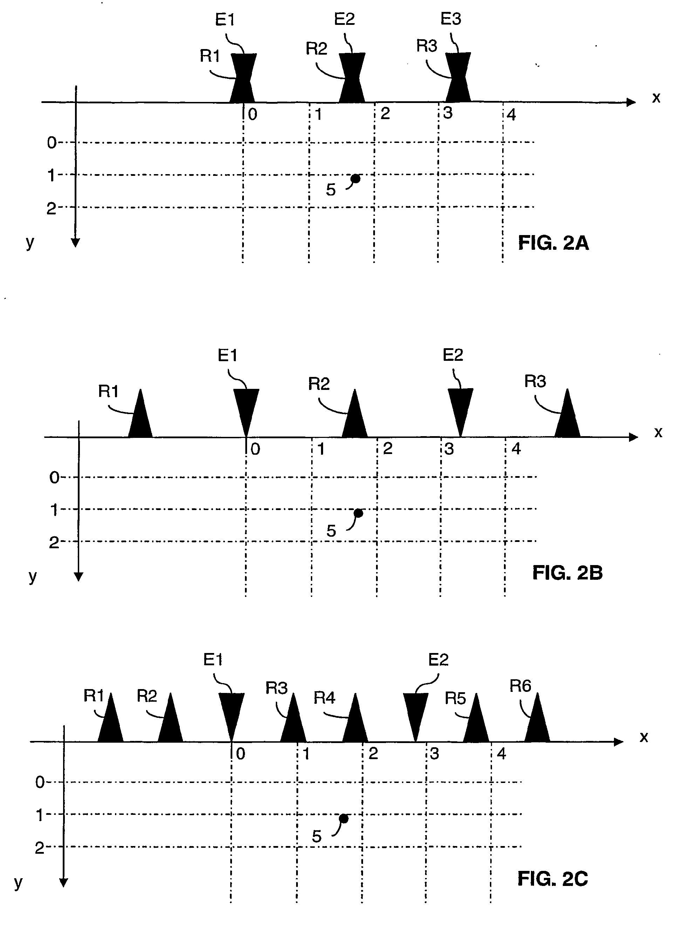

Les figures 2a à 2c représentent différents agencements des émetteurs E et des récepteurs R, dont 2b et 2c sont conformes à l'invention.

Sur chacune de ces figures, on a représenté un repère cartésien avec deux axes perpendiculaires x, y pour repérer la position d'un objet 5.

Dans l'exemple décrit ici, on utilise un système de coordonnées (x, y) relatives, exprimées en centimètres, et dans lequel :

- l'origine des abscisses (x) est prise en face de l'émetteur E1 ; et
- l'origine des ordonnées (y) est fixée à 0.5 cm de la ligne formée par les émetteurs E et les récepteurs R.

Dans ces trois exemples, la position de l'objet 5, correspondant à la position du point de cet objet le plus proche des émetteurs et des récepteurs est (1.75, 1).

Dans l'exemple représenté à la **figure 2a,** on utilise plusieurs récepteurs Ri, chacun étant associé à un unique émetteur Ei. Dans cet exemple un émetteur et son récepteur associé sont préférentiellement positionnés l'un en dessous de l'autre.

La position de l'objet 5, peut être déterminée par le moyen de traitement 21, en calculant au moins deux valeurs caractéristiques K1, K2 à partir de mesures de la quantité de lumière réfléchie par l'objet 5, ces mesures étant effectuées pour deux couples émetteur-récepteur distincts.

Dans l'exemple de la figure 2a, la valeur caractéristique K1 (respectivement K2) peuvent être choisie égale à la valeur mesurée par le récepteur R1 (respectivement R2) lorsque seul l'émetteur associé E1 (respectivement E2) est allumé.

Soit, avec la notation choisie :

$$K1 = V(E1, R1) ;$$

$$K2 = V(E2, R2) ;$$

$$K3 = V(E3, R3) ...$$

Les valeurs caractéristiques K sont exprimées en Volts.

Afin d'augmenter la précision de mesure de la position de l'objet, notamment lorsque l'objet est très ou très peu réfléchissant, ou à la limite de la zone déterminée 3, il est avantageux d'augmenter le nombre de récepteurs associés à chaque émetteur. Par exemple, deux récepteurs peuvent être associés pour chaque émetteur.

Dans l'agencement de la **figure 2b,** les émetteurs E et les récepteurs R sont disposés alternativement et régulièrement.

Dans cet agencement, on peut choisir, pour chaque émetteur E, une valeur caractéristique K, en faisant la moyenne des valeurs mesurées par ses deux récepteurs voisins lorsque seul cet émetteur E est allumé.

Soit :

$$K1= 0.5 * (V(E1, R1) + V(E1, R2)) ;$$

$$K2= 0.5 * (V(E2, R2) + V(E2, R3)) \ldots$$

Mais on peut aussi choisir, pour chaque récepteur R, une valeur caractéristique K, en faisant la moyenne des valeurs mesurées par ce récepteur voisins lorsque ces deux émetteurs voisins sont successivement allumés.

Soit :

$$K1= 0.5 * (V(E1, R2) + V(E2, R2)) ;$$

$$K2= 0.5 * (V(E2, R3) + V(E3, R3)) \ldots$$

De façon générale, lorsqu'on dispose d'une pluralité d'émetteurs et de récepteurs, on peut choisir une valeur caractéristique associée à un émetteur en calculant une fonction des valeurs mesurées par au moins deux récepteurs lorsque seul cet émetteur est allumé, les coefficients de cette fonction étant fonction de la distance entre l'émetteur et un récepteur.

Ainsi, en référence à la **figure 2c,** on peut choisir la valeur caractéristique K1 associée à l'émetteur E1 égale à :

$$K1= 1/6 (V(E1, R1) + 2V(E1, R2) + 2V(E1, R3) + V(E1, R4))$$

Dans le mode préféré de réalisation décrit ici, et par souci de simplification, on se limitera au calcul de deux valeurs caractéristiques K1, K2. Bien entendu, l'homme du métier comprendra qu'en augmentant le nombre de valeurs caractéristiques, on augment la précision de la détection au détriment du temps de calcul et de l'occupation mémoire.

Conformément à l'invention, la position x (respectivement y) de l'objet dans la zone de détection 3 est lue directement dans une table de positions Tx (respectivement Ty) indexée par les valeurs caractéristiques K1, K2.

Dans le mode préféré de réalisation décrit ici, le contenu de cette table est obtenue en effectuant tout d'abord une série de mesures préliminaires des valeurs caractéristiques précitées pour un certain nombre de positions d'un objet du type de celui à détecter.

Ces tableaux pré-calculés comportent un grand nombre d'échantillons de ces deux valeurs, préalablement acquis pour un objet donné, dont les caractéristiques de réflexion lumineuse sont proches de celles du type d'objet que l'on souhaite détecter (un doigt humain, dans le cas de l'exemple).

A titre d'exemple, les tables T1 et T2 donnent respectivement les valeurs caractéristiques K1 et K2 pour un doigt placé à différentes positions x, y dans la zone de détection de l'agencement de la figure 2b.

Table T1 : K1 en fonction de x et y

| y        x | 0 | 0.5 | 1 | 1.5 | 2 |
|---|---|---|---|---|---|
| **0** | 2.6460 | 1.9260 | 1.1120 | 0.7290 | 0.4970 |
| **0.5** | 2.3786 | 1.8600 | 0.9726 | 0.6740 | 0.5548 |
| **1** | 1.8158 | 1.5300 | 0.7958 | 0.5670 | 0.4744 |
| **1.5** | 1.1802 | 0.9800 | 0.6962 | 0.5330 | 0.3996 |
| **2** | 1.1030 | 0.8600 | 0.7270 | 0.5100 | 0.4980 |

Table T2 : K2 en fonction de x et y.

| y        x | 0 | 0.5 | 1 | 1.5 | 2 |
|---|---|---|---|---|---|
| **0** | 0.7478 | 0.9870 | 1.1526 | 1.9140 | 2.3786 |
| **0.5** | 0.5376 | 0.7540 | 1.1632 | 1.7030 | 2.0622 |

(suite)

| y x | 0 | 0.5 | 1 | 1.5 | 2 |
|---|---|---|---|---|---|
| 1 | 0.5220 | 0.6430 | 1.1590 | 1.6020 | 1.9250 |
| 1.5 | 0.4234 | 0.5320 | 0.8598 | 1.1000 | 1.1928 |
| 2 | 0.3892 | 0.5310 | 0.7644 | 0.8570 | 0.9254 |

Les relations entre les signaux reçus par les différents couples émetteur-récepteur d'une part, et la position de l'objet 5 d'autre part, pouvant rapidement devenir complexes, on utilise une modélisation basée sur la mesure des résultats obtenus pour une position d'un objet connue, que l'on modélise ensuite par une méthode de régression polynomiale en considérant que la relation entre les valeurs mesurées et les coordonnées de l'objet a la forme d'un polynôme d'un degré prédéfini, et on applique de façon connue, une méthode d'optimisation afin de déterminer les coefficients de ce polynôme.

Dans l'exemple décrit ici, on effectue une régression polynomiale de degré trois en x et trois en y pour interpoler les tables T1 et T2.

De façon connue, cela revient à déterminer les coefficients $p_{K1,n,m}$ et $p_{K2,n,m}$ des polynômes $P_{K1}$ et $P_{K2}$, d'interpolation des valeurs caractéristiques K1 et K2.

Pour les polynômes $P_{K1}$ et $P_{K2}$, on obtient avec les notations suivantes :

$$P_{K1}(x, y) = \sum_{n=0,m=0}^{n=3,m=3} p_{K1,n,m}\, x^n y^m \quad , \quad P_{K2}(x, y) = \sum_{n=0,m=0}^{n=3,m=3} p_{K2,n,m}\, x^n y^m$$

| n m | 3 | 2 | 1 | 0 |
|---|---|---|---|---|
| 3 | 0.3198 | -1.1787 | 1.0280 | 0.1519 |
| 2 | -0.7237 | 2.8405 | -2.7832 | -0.0560 |
| 1 | -0.0127 | -0.4555 | 1.5417 | -1.5673 |
| 0 | 0.5774 | -1.6591 | 0.2281 | 2.6513 |
| Facteurs $p_{K1,n,m}$ de $P_{K1}$ | | | | |

| n m | 3 | 2 | 1 | 0 |
|---|---|---|---|---|
| 3 | 0.0417 | 0.0829 | -0.2968 | -0.1443 |
| 2 | -0.1752 | -0.0527 | 0.5083 | 0.7257 |
| 1 | 0.3223 | -0.7517 | 0.3932 | -0.0687 |
| 0 | -0.0956 | 0.3768 | -0.5644 | 0.7643 |
| Facteurs $P_{K2,n,m}$ de $P_{K2}$ | | | | |

On utilise ensuite une méthode discrète pour obtenir une approximation des fonctions Tx(K1, K2) et Ty(K1, K2) inverses des fonctions interpolées $P_{K1}(x, y)$ et $P_{K2}(x, y)$.

On obtient ainsi deux tables de positions Tx et Ty, fournissant respectivement la valeurs des positions x et y en fonction des valeurs caractéristiques K1 et K2 dans l'exemple de l'agencement de la figure 2b.

Ces tableaux pré-calculés comporte un grand nombre d'échantillons de ces deux valeurs, préalablement acquis pour un objet donné, dont les caractéristiques de réflexion lumineuse sont proches de celles du type d'objet que l'on souhaite détecter (un doigt humain, dans le cas de l'exemple).

A partir de ces deux paramètres, on peut avoir une approximation suffisante de la position spatiale de l'objet, en effectuant une régression polynomiale par exemple de degré 4 sur ces acquisitions au moyen d'une méthode connue de calcul matriciel. On utilise cette régression polynomiale pour générer une table donnant la position de l'objet en fonction des deux paramètres d'entrée.

Ce calcul peut être fait de manière préalable sur un micro-ordinateur. L'unité de traitement, située dans l'unité de commande, se contente alors de calculer, en permanence les « valeurs de caractérisation », et d'utiliser la table générée par le micro-ordinateur afin de déterminer les coordonnées de l'objet.

Dans l'exemple décrit ici, la résolution est choisie arbitrairement à 0.25V.

| K2 K1 | 0 | 0.25 | 0.5 | 0.75 | 1 | 1.25 | 1.5 | 1.75 | 2 |
|---|---|---|---|---|---|---|---|---|---|
| **0** | 1.0 | 0.6 | 0.3 | 0.1 | 0.0 | 0.0 | 0.1 | 0.0 | 0.0 |
| **0.25** | 2.0 | 1.0 | 0.6 | 0.3 | 0.0 | 0.0. | 0.1 | 0.1 | 0.0 |
| **0.5** | 2.0 | 1.4 | 1.0 | 0.6 | 0.4 | 0.3 | 0.3 | 0.1 | 0.1 |
| **0.75** | 2.0 | 2.0 | 1.4 | 0.9 | 0.7 | 0.7 | 0.6 | 0.5 | 0.4 |
| **1** | 2.0 | 2.0 | 1.6 | 1.1 | 0.9 | 0.8 | 0.7 | 0.6 | 0.4 |
| **1.25** | 2.0 | 2.0 | 1.5 | 1.2 | 1.1 | 1.0 | 0.8 | 0.7 | 0.5 |
| **1.5** | 1.9 | 1.9 | 1.5 | 1.3 | 1.2 | 1.1 | 0.9 | 0.8 | 0.6 |
| **1.75** | 1.8 | 1.8 | 2.0 | 1.4 | 1.3 | 1.2 | 1.0 | 0.9 | 0.7 |
| **2** | 1.8 | 1.8 | 1.7 | 1.6 | 1.5 | 1.4 | 1.2 | 1.0 | 0.8 |
| Tx(K1, K2) | | | | | | | | | |

| K2 K1 | 0 | 0.25 | 0.5 | 0.75 | 1 | 1.25 | 1.5 | 1.75 | 2 |
|---|---|---|---|---|---|---|---|---|---|
| **0** | 2.0 | 1.9 | 1.9 | 1.9 | 1.9 | 2.0 | 1.2 | 1.1 | 0.9 |
| **0.25** | 2.0 | 2.0 | 1.9 | 1.9 | 1.9 | 2.0 | 1.2 | 1.1 | 0.9 |
| **0.5** | 2.0 | 2.0 | 2.0 | 2.0 | 1.9 | 1.6 | 1.1 | 1.0 | 0.8 |
| **0.75** | 1.9 | 2.0 | 2.0 | 2.0 | 1.7 | 1.3 | 0.8 | 0.6 | 0.4 |
| **1** | 1.7 | 1.8 | 1.8 | 1.8 | 1.3 | 1.1 | 0.5 | 0.0 | 0.0 |
| **1.25** | 1.6 | 1.6 | 1.4 | 1.4 | 1.0 | 0.6 | 0.0 | 0.0 | 0.0 |
| **1.5** | 1.3 | 1.3 | 1.0 | 1.0 | 0.6 | 0.0 | 0.0 | 0.0 | 0.0 |
| **1.75** | 1.0 | 1.0 | 1.0 | 1.0 | 0.1 | 0.0 | 0.0 | 0.0 | 0.0 |
| **2** | 0.7 | 0.6 | 0.4 | 0.4 | 0.0 | 0.0 | 0.0 | 0.0 | 0.0 |
| Ty(K1, K2) | | | | | | | | | |

De retour à la figure 2b, pour déterminer la position de l'objet 5 représenté, on mesure :

- la quantité de lumière V(E1, R1) mesurée par le récepteur R1 lorsque l'objet 5 est éclairé uniquement par l'émetteur E1 ;
- la quantité de lumière V(E1, R2) mesurée par le récepteur R2 lorsque l'objet 5 est éclairé uniquement par l'émetteur E1 ;
- la quantité de lumière V(E2, R2) mesurée par le récepteur R2 lorsque l'objet 5 est éclairé uniquement par l'émetteur E2 ; et
- la quantité de lumière V(E2, R3) mesurée par le récepteur R3 lorsque l'objet 5 est éclairé uniquement par l'émetteur E2.

Dans cet exemple on obtient :

- V(E1, R1) = 0.22 ;
- V(E1, R2) = 0.59 ;

- V(E2, R2) = 1.98 ; et
- V(E2, R3) = 1.25.

En appliquant les formules précitées :

$$K1 = 0.5 * (V(E1, R1) + V(E1, R2)) ;$$

$$K2 = 0.5 * (V(E2, R2) + V(E2, R3)) ;$$

on calcule les deux valeurs caractéristiques K1, K2 :

$$K1 = 0.405 ;$$

$$K2 = 1.615 ;$$

Puis on discrétise ces valeurs selon la résolution des tables de positions Tx et Ty, soit

$$K1 = 0.5 ;$$

et

$$K2 = 1.5$$

On détermine ensuite directement les positions x, y de l'objet 5 par lecture directe dans les tables de positions Tx et Ty indexées par les valeurs caractéristiques K1, K2.

$$x = Tx(0.5, 1.5) = 1.5 \text{ cm} ;$$

et

$$y = Ty(0.5, 1.5) = 1.0 \text{ cm}.$$

Dans cet exemple, la position exacte de l'objet 5 était (1.75, 1). Le résultat de la mesure est donc acceptable étant donné la résolution choisie.

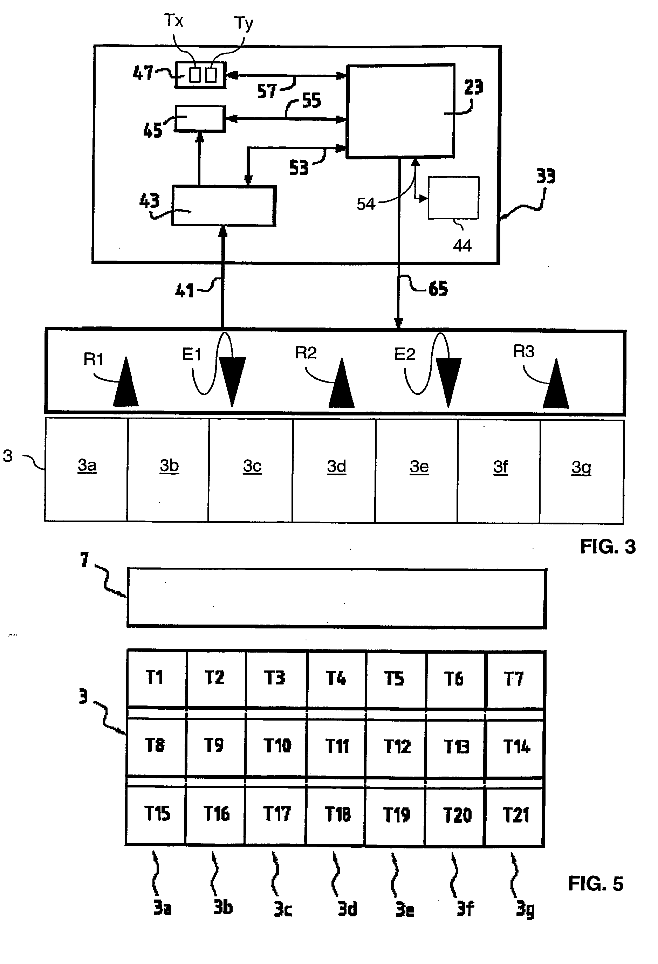

Les figures 3 à 5 illustrent un exemple de réalisation d'un dispositif et d'un procédé de détection optique selon l'invention.

Selon l'exemple de la **figure 3,** l'ensemble alterné d'émetteurs et récepteurs de lumière comporte sept émetteurs (par exemple infrarouge), et six récepteurs reliés à un module de commande 33 comportant une unité de commande 23 à microprocesseur, un multiplexeur 43, une mémoire vive 44, un convertisseur analogique-numérique 45 et un moyen de stockage 47 du type EEPROM.

Le moyen de stockage 47 mémorise les tables de positions Tx et Ty.

L'unité 23 commande l'allumage et l'extinction de chacun des émetteurs, et la mesure sur chacun des récepteurs.

La zone déterminée de détection 3 est délimitée par sept zones ou colonnes 3a à 3g de détection. Les émetteurs et récepteurs sont associés comme dans l'exemple précédent décrit en référence à la figure 2b.

Ainsi, les signaux délivrés par les récepteurs, via la liaison 41, sont délivrés à l'entrée du multiplexeur 43 dont la sortie est reliée au convertisseur analogique-numérique 45. Les données V(Ei, Ri) résultant de la conversion des signaux des récepteurs 11 sont enregistrées dans la mémoire vive 44 sous le contrôle de l'unité de commande 23 qui est respectivement reliée aux organes 43, 44, 45, et 47 par des liaisons 53, 54, 55 et 57.

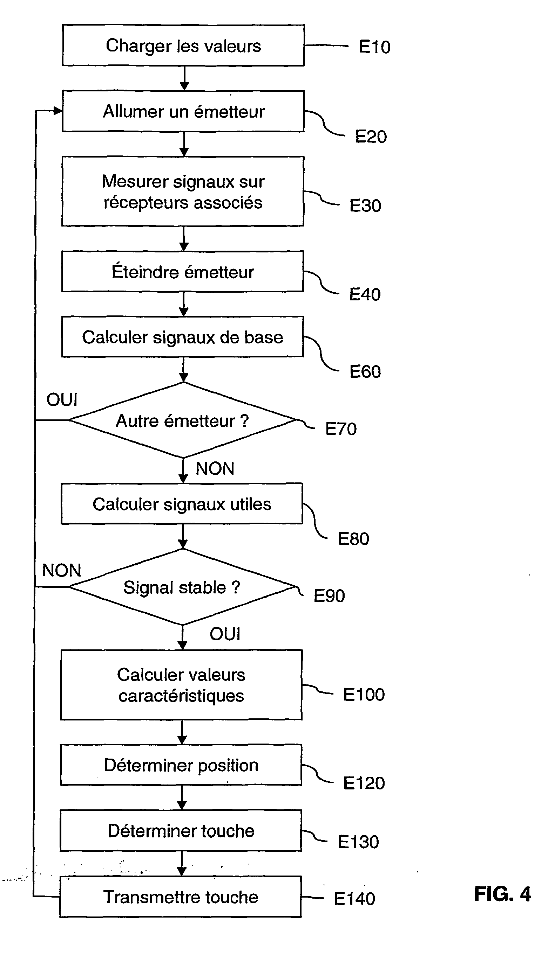

La **figure 4** est un organigramme illustrant les instructions intégrées dans l'unité 23 commandant l'allumage et l'extinction de chacun des émetteurs, et la mesure sur chacun des récepteurs.

A l'étape E10, les valeurs préalablement mémorisées de la réflexion au repos, c'est-à-dire lorsque aucun objet n'est présent sur la zone déterminée 3, sont chargées dans l'unité de commande 23.

A l'étape E20, un émetteur Ei est allumé.

A l'étape E30, les signaux sur les récepteurs Rj associés à cet émetteur Ei sont mesurés et mémorisés dans la mémoire vive 44.

A l'étape E40, l'émetteur est éteint.

A l'étape E60, des « signaux de base » sont calculés en retranchant les valeurs mesurées à l'étape précédente E40 de celles mesurées à l'étape E30.

L'étape E70 est un test permettant de recommencer les étapes E20 à E60 pour chaque couple émetteur-récepteur nécessaire au calcul des valeurs caractéristiques K1, K2.

A l'étape E80, on retranche à ces valeurs de signaux de base les valeurs mémorisées de la réflexion au repos, chargées lors de l'initialisation du programme pour former des valeurs de « signaux utiles » V(Ei, Rj), méorisés dans la mémoire vive 44.

A l'étape E90, si le signal n'est pas stable, c'est-à-dire si les signaux utiles ont évolué depuis la première itération, alors on recommence à l'étape E20.

En revanche, si le signal est stable, c'est-à-dire si les signaux utiles n'ont pas bougé depuis un nombre donné d'itérations, et si le signal réfléchi est supérieur à une valeur-seuil; alors on continue à l'étape E100.

A l'étape E100, on calcule pour les valeurs caractéristiques K1, K2 à partir des valeurs mesurées V(Ei, Rj) comme décrit précédemment.

A l'étape E120, on détermine la position (x, y) de l'objet 5 en lisant les tables de positions Tx, Ty indexées par les valeurs caractéristiques K1, K2.

Le calcul de ces tables peut être fait de manière préalable sur un micro-ordinateur.

L'unité de traitement, située dans l'unité de commande, se contente alors de calculer, en permanence valeurs caractéristiques K1, K2, et d'utiliser les tables de positions établies par le micro-ordinateur afin de déterminer les coordonnées de l'objet.

Ensuite, à l'étape E130, on utilise des seuils afin de discrétiser ces coordonnées calculées à l'étape précédente, afin de les transformer en numéro de touche.

A titre d'exemple la **figure 5** illustre une zone déterminée 3 selon l'exemple de la figure 3 comportant 7 colonnes, et 3 lignes présentant 21 touches T1 à T21. Cette zone déterminée 3 peut par exemple correspondre à un champ d'environ 11 x 6 cm.

Finalement, à l'étape E140, le numéro de touche est envoyé à un équipement du type micro-ordinateur, équipement industriel, ou autre, auquel est connecté le dispositif selon l'invention, avant de recommencer à partir de l'étape E20.

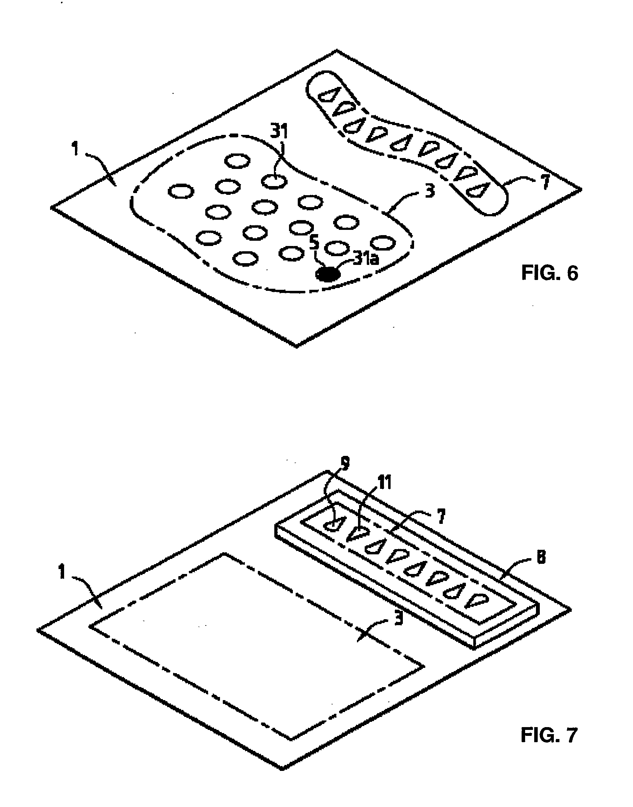

La **figure 6** montre que la zone déterminée 3 peut comporter un ensemble de zones élémentaires 31, chacune étant associée à une fonction donnée, de sorte que toute position de l'objet 5 dans une zone élémentaire 31a, active la fonction associée à cette zone élémentaire 31a.

Ainsi, le dispositif selon l'invention peut correspondre à un terminal de saisie de données permettant une entrée manuelle de données pour ordinateurs, téléphones fixes ou mobiles, PDA, ou tout autre appareil électronique.

En effet, la zone déterminée 3 peut correspondre à une zone de saisie et chacune des zones élémentaires peut correspondre à une touche.

Selon un mode particulier de l'invention, la **figure 7** montre une zone déterminée 3 de forme rectangulaire et l'ensemble 7 d'émetteurs E et récepteurs R de lumière est disposé à proximité d'un seul côté de cette zone rectangulaire, par exemple son côté le plus grand.

L'ensemble d'émetteurs E et récepteurs R peut être compris dans une barrette 8 qui peut s'intégrer facilement sur différentes surfaces, par exemple sur un écran LCD ou autre.

On notera que le dispositif selon l'invention peut être fixé sur une surface quelconque (écran d'ordinateur ou autre) qui ne sert que de repère pour un utilisateur, et sur laquelle sont sérigraphiées, ou gravées les touches de saisie.

Bien entendu, l'homme du métier comprendra que le dispositif peut être utilisé pour détecter le déplacement d'un objet et pour mesurer la vitesse de ce déplacement par analyse des positions successives de cet objet.

**Revendications**

1. Procédé de détection optique pour déterminer la position d'un objet (5) sur une zone déterminée de détection (3) d'une surface (1), ce procédé comportant :

- une étape préliminaire de disposition, à proximité de ladite zone de détection (3), et d'un même côté par rapport à l'objet (5), d'une pluralité d'émetteurs (Ei) et de récepteurs (Ri) de lumière pour couvrir la zone de détection (3), chaque émetteur (E1, E2) étant adapté à émettre la lumière de sorte qu'elle ne rencontre pas ladite surface (1) dans la zone de détection (3) ; le procédé comportant :

- une étape (E30) au cours de laquelle on effectue, pour au moins deux couples émetteur (Ei) - récepteur (Ri) distincts, une mesure, par ledit récepteur (Ri), de la quantité de lumière réfléchie par l'objet (5) lorsque l'objet (5) est éclairé par ledit émetteur (Ei) ;

- une étape (E100) de calcul d'au moins deux valeurs caractéristiques (K1, K2) à partir des valeurs mesurées lors de l'étape précédente (E30) de mesure ;

le procédé étant **caractérisé en ce que**, au cours de ladite étape préliminaire de disposition, on dispose alternativement et régulièrement la pluralité d'émetteurs (Ei) et de récepteurs (Ri), **en ce qu'**on calcule (étape E100) une valeur caractéristique (Ki) par émetteur (Ei) en faisant la moyenne des valeurs mesurées par les récepteurs (Ri, Ri+1) situés de chaque côté dudit émetteur (Ei) lorsque seul ledit émetteur (Ei) est allumé ; et **en ce qu'**il comporte en outre :

- une étape (E120) de détermination d'au moins une position (x) de l'objet (5), par lecture directe dans une table (Tx) indexée par lesdites au moins deux valeurs caractéristiques (K1, K2), le contenu de ladite table (Tx) étant prédéterminé et fixé avant ladite étape (E30) de mesure.

2. Procédé de détection optique pour déterminer la position d'un objet (5) sur une zone déterminée de détection (3) d'une surface (1), ce procédé comportant :

- une étape préliminaire de disposition, à proximité de ladite zone de détection (3), et d'un même côté par rapport à l'objet (5), d'une pluralité d'émetteurs (Ei) et de récepteurs (Ri) de lumière pour couvrir la zone de détection (3), chaque émetteur (E1, E2) étant adapté à émettre la lumière de sorte qu'elle ne rencontre pas ladite surface (1) dans la zone de détection (3) ; le procédé comportant :
- une étape (E30) au cours de laquelle on effectue, pour au moins deux couples émetteur (Ei) - récepteur (Ri) distincts, une mesure, par ledit récepteur (Ri), de la quantité de lumière réfléchie par l'objet (5) lorsque l'objet (5) est éclairé par ledit émetteur (Ei) ;
- une étape (E100) de calcul d'au moins deux valeurs caractéristiques (K1, K2) à partir des valeurs mesurées lors de l'étape précédente (E30) de mesure ; et

le procédé étant **caractérisé en ce que**, au cours de ladite étape préliminaire de disposition, on dispose alternativement et régulièrement la pluralité d'émetteurs (Ei) et de récepteurs (Ri), **en ce qu'**on calcule (étape E100) une valeur caractéristique (Ki) par récepteur (Ri) en faisant la moyenne des valeurs mesurées par ce récepteur (Ri), lorsque les émetteurs (Ei-1, Ei) situés de chaque côté dudit récepteur (Ri) sont allumés successivement ; et **en ce qu'**il comporte en outre :

- une étape (E120) de détermination d'au moins une position (x) de l'objet (5), par lecture directe dans une table (Tx) indexée par lesdites au moins deux valeurs caractéristiques (K1, K2), le contenu de ladite table (Tx) étant prédéterminé et fixé avant ladite étape (E30) de mesure.

3. Procédé selon la revendication 1, **caractérisé en ce qu'**on (étape E100) calcule une valeur caractéristique par émetteur (E1) en calculant une fonction des valeurs mesurées par au moins trois récepteurs (R1, R2, R3, R4) lorsque seul cet émetteur est allumé, les coefficients de cette fonction affine étant fonction de la distance séparant chaque récepteur de cet émetteur (E1).

4. Procédé selon l'une quelconque des revendications 1 à 3, **caractérisé en ce que**, pour chacun desdits couples émetteur (Ei) - récepteur (Ri), on répète ladite étape de mesure (E30) jusqu'à mesurer une quantité de lumière réfléchie stable.

5. Procédé selon l'une quelconque des revendications 1 à 4, **caractérisé en ce que** ladite table prédéterminée (Tx) est obtenue par une méthode de régression polynomiale à partir d'un nombre de mesures préliminaires effectuées dans les mêmes conditions que ladite étape (E30) de mesure.

6. Procédé selon l'une quelconque des revendications 1 à 5 dans lequel, ladite surface (1) étant sensiblement plane, **caractérisé en ce que**, au cours de ladite étape préliminaire de disposition, on dispose, sur une ligne unique (13), des émetteurs (Ei) et des récepteurs (Ri) de lumière ayant un axe d'émission (15), respectivement de réception (17) sensiblement parallèle à ladite zone de détection déterminée.

7. Procédé selon l'une quelconque des revendications 1 à 6, **caractérisé en ce que** ladite zone de détection (3) est rectangulaire et **en ce que** les émetteurs (E1, E2) et récepteurs (R1, R2) sont disposés à proximité d'un seul côté de ladite zone rectangulaire.

8. Procédé selon l'une quelconque des revendications 1 à 7, **caractérisé en ce que** la lumière émise par les émetteurs (9) de lumière est de la lumière ordinaire non cohérente.

9. Procédé selon la revendication 8, **caractérisé en ce que** la longueur d'onde de la lumière émise est dans une plage de longueurs d'ondes parmi les plages suivantes : UV, visible, et infrarouge.

10. Procédé selon l'une quelconque des revendications 1 à 9, **caractérisé en ce que** ladite zone de détection (3) comporte un ensemble de zones élémentaires (31), chacune étant associée à une fonction donnée, de sorte que toute position de l'objet dans une zone élémentaire (31) active la fonction associée à cette zone élémentaire.

11. Dispositif de détection optique pour déterminer la position d'un objet (5) sur une zone déterminée de détection (3) d'une surface (1), ce dispositif comportant, disposés à proximité de ladite zone déterminée (3), et d'un même côté par rapport à l'objet (5), une pluralité d'émetteurs (Ei) adaptés à émettre de la lumière de sorte qu'elle ne rencontre pas ladite surface (1) dans la zone de détection (3) et de récepteurs (Ri) de lumière pour couvrir ladite zone de détection (3), et adaptés à mesurer une valeur représentative de la quantité de lumière réfléchie par l'objet (5), ledit dispositif comportant un moyen de contrôle (19) pour allumer ledit émetteur (9) et un moyen de traitement (21) adapté à :

   - obtenir et mémoriser, pour au moins deux couples émetteur (Ei) - récepteur (Ri) distincts, la quantité de lumière réfléchie par ledit objet (5) et mesurée par ledit récepteur (Ri) lorsque l'objet est éclairé par ledit émetteur (Ei) ;
   - calculer au moins deux valeurs caractéristiques (K1, K2) à partir des valeurs mesurées par au moins un récepteur (Ri) ;
   le dispositif étant **caractérisé en ce que** :

   - la pluralité d'émetteurs (E1, E2) et de récepteurs (R1, R2) étant disposés alternativement et régulièrement, le moyen de traitement (21) calcule une valeur caractéristique (Ki) par émetteur (Ei), en faisant la moyenne des valeurs mesurées par les récepteurs (Ri, Ri+1) situés de chaque côté dudit émetteur (E1) lorsque seul ledit émetteur (E1) est allumé ;
   - et **en ce que** le moyen de traitement est en outre adapté à :

   - déterminer au moins une position (x) de l'objet (5), par lecture directe dans une table (Tx) indexée par lesdites valeurs caractéristiques (K1, K2), le contenu de ladite table (Tx) étant prédéterminé et fixé avant ladite obtention.

12. Dispositif de détection optique pour déterminer la position d'un objet (5) sur une zone déterminée de détection (3) d'une surface (1), ce dispositif comportant, disposés à proximité de ladite zone déterminée (3), et d'un même côté par rapport à l'objet (5), une pluralité d'émetteurs (Ei) adaptés à émettre de la lumière de sorte qu'elle ne rencontre pas ladite surface (1) dans la zone de détection (3) et de récepteurs (Ri) de lumière pour couvrir ladite zone de détection (3), et adaptés à mesurer une valeur représentative de la quantité de lumière réfléchie par l'objet (5), ledit dispositif comportant un moyen de contrôle (19) pour allumer ledit émetteur (9) et un moyen de traitement (21) adapté à :

   - obtenir et mémoriser, pour au moins deux couples émetteur (Ei) - récepteur (Ri) distincts, la quantité de lumière réfléchie par ledit objet (5) et mesurée par ledit récepteur (Ri) lorsque l'objet est éclairé par ledit émetteur (Ei) ;
   - calculer au moins deux valeurs caractéristiques (K1, K2) à partir des valeurs mesurées par au moins un récepteur (Ri) ;
   le dispositif étant **caractérisé en ce que** :

   - la pluralité d'émetteurs (E1, E2) et de récepteurs (R1, R2) étant disposés alternativement et régulièrement, le moyen de traitement (21) calcule une valeur caractéristique (Ki) par récepteur en faisant la moyenne des valeurs mesurées par ce récepteur (Ri), lorsque les émetteurs (Ei-1, Ei) situés de chaque côté dudit récepteur (Ri) sont allumés successivement,
   - et **en ce que** le moyen de traitement est en outre adapté à :
   - déterminer au moins une position (x) de l'objet (5), par lecture directe dans une table (Tx) indexée par lesdites valeurs caractéristiques (K1, K2), le contenu de ladite table (Tx) étant prédéterminé et fixé avant ladite obtention.

**13.** Dispositif selon la revendication 11, **caractérisé en ce que** les moyens de traitement (21) calculent une valeur caractéristique (Ki) par émetteur (Ei) en calculant une fonction des valeurs mesurées par au moins trois récepteurs (R1, R2, R3, R4)i), lorsque seul cet émetteur (Ei) est allumé, les coefficients de cette fonction affine étant fonction de la distance séparant chaque récepteur (Ri) de cet émetteur (Ei).

**14.** Dispositif selon l'une quelconque des revendications 11 à 13, **caractérisé en ce que** les moyens de traitement sont adaptés, pour chaque couple émetteur-récepteur, à répéter la mesure de quantité de lumière réfléchie, jusqu'à obtenir une quantité stable.

**15.** Dispositif selon l'une quelconque des revendications 11 à 14, **caractérisé en ce que** ladite table prédéterminée (Tx) est obtenue par une méthode de régression polynomiale à partir d'un nombre de mesures préliminaires effectuées dans les mêmes conditions que ladite mesure.

**16.** Dispositif selon l'une quelconque des revendications 11 à 15 dans lequel, ladite surface (1) étant sensiblement plane, **caractérisé en ce que** lesdits émetteurs (Ei) et lesdits récepteurs (Ri) sont disposés sur une ligne unique (13), et **en ce qu'**ils comportent un axe d'émission (15), respectivement de réception (17) de lumière sensiblement parallèle à ladite zone de détection déterminée.

**17.** Dispositif selon l'une quelconque des revendications 11 à 16, **caractérisé en ce que** ladite zone de détection (3) est rectangulaire et **en ce que** les émetteurs (E1, E2) et récepteurs (R1, R2) sont disposés à proximité d'un seul côté de ladite zone rectangulaire.

**18.** Dispositif selon l'une quelconque des revendications 11 à 17, **caractérisé en ce que** la lumière émise par les émetteurs de lumière est de la lumière ordinaire non cohérente.

**19.** Dispositif selon la revendication 18, **caractérisé en ce que** la longueur d'onde de la lumière émise est dans une plage de longueurs d'ondes parmi les plages suivantes : UV, visible, et infrarouge.

**20.** Dispositif selon l'une quelconque des revendications 11 à 19, **caractérisé en ce que** ladite zone déterminée comporte un ensemble de zones élémentaires (31), chacune étant associée à une fonction donnée, de sorte que toute position de l'objet dans une zone élémentaire permet l'activation de la fonction associée à cette zone élémentaire.

**21.** Dispositif selon la revendication 20, **caractérisé en ce que** ladite zone déterminée correspond à une zone de saisie et chacune des zones élémentaires correspond à une touche.

**22.** Terminal de saisie de données comportant un dispositif selon l'une quelconque des revendications 11 à 21.

**23.** Utilisation d'un procédé de détection selon l'une quelconque des revendications 1 à 10 ou d'un dispositif de détection selon l'une quelconque des revendications 11 à 22 pour détecter le déplacement d'un objet ou mesurer la vitesse de déplacement d'un objet.

**Claims**

**1.** An optical detection method of determining the position of an object (5) in a particular detection area (3) of a surface (1), the method comprising:

- a preliminary step of disposing in the vicinity of said detection area (3) and on the same side thereof relative to the object (5) a plurality of emitters (Ei) and of receivers (Ri) adapted to cover the detection area (3), each emitter (E1, E2) being adapted to emit light in such a way that it does not hit said surface (1) in the detection area (3), the method being **characterized in that** it further comprises:
- a step (E30) during which one of said receiver (Ri) measures the quantity of light reflected by the object (5) when the object (5) is illuminated by one of said emitter (Ei) for at least two different emitter (Ei) - receiver (Ri) pairs,
- a step (E100) of calculating at least two characteristic values (K1, K2) from said measured values;
said method being **characterized in that**, during said preliminary step, the plurality of emitters (Ei) and receivers (Ri) are disposed in an alternating and regular arrangement and a characteristic value (Ki) is calculated for each emitter (Ei) (step E100) by averaging the values measured by the receivers (Ri, Ri+1) on each side of said emitter (Ei) when only said emitter (Ei) is turned on; and **in that** it further comprises:
- a step (E120) of determining at least one position (x) of the object (5) by directly reading a table indexed by said at least two characteristic values (K1, K2), the content of said table (Tx) being predetermined and set before said measurement step (E30).

2. An optical detection method of determining the position of an object (5) in a particular detection area (3) of a surface (1), the method comprising:

  - a preliminary step of disposing in the vicinity of said detection area (3) and on the same side thereof relative to the object (5) a plurality of emitters (Ei) and of receivers (Ri) adapted to cover the detection area (3), each emitter (E1, E2) being adapted to emit light in such a way that it does not hit said surface (1) in the detection area (3), the method being **characterized in that** it further comprises:
  - a step (E30) during which one of said receiver (Ri) measures the quantity of light reflected by the object (5) when the object (5) is illuminated by one of said emitter (Ei) for at least two different emitter (Ei) - receiver (Ri) pairs,
  - a step (E100) of calculating at least two characteristic values (K1, K2) from said measured values;
  said method being **characterized in that**, during said preliminary step, emitters (Ei) and receivers (Ri) are disposed in an alternating and regular arrangement and a characteristic value (Ki) is calculated (step E100) for each receiver (Ri) by averaging the values measured by that receiver (Ri) when the emitters (Ei-1, Ei) situated on each side of said receiver (Ri) are turned on successively; and **in that** it further comprises:
  - a step (E120) of determining at least one position (x) of the object (5) by directly reading a table indexed by said at least two characteristic values (K1, K2), the content of said table (Tx) being predetermined and set before said measurement step (E30).

3. A method according to claim 1, **characterized in that** a characteristic value is calculated (step E90) for each emitter (Ei) by calculating a function of the values measured by at least three receivers (R1, R2, R3, R4) when only that emitter is turned on, the coefficients of this affine function being a function of the distance between each receiver and that emitter (Ei).

4. A method according to any one of claims 1 to 3, **characterized in that** said measurement step (E30) is repeated for each of said emitter (Ei) - receiver (Ri) pairs until a stable quantity of reflected light is measured.

5. A method according to any one of claims 1 to 4, **characterized in that** said predetermined table (Tx) is obtained by a polynomial regression method from a number of preliminary measurements effected under the same conditions as apply to said measurement step (E30).

6. A method according to any one of claims 1 to 5 wherein said surface (1) is substantially plane, **characterized in that**, during said preliminary step, there are disposed in a single line (13) emitters (Ei) and receivers (Ri) of light having an emission axis (15), respectively a reception axis (17), substantially parallel to said particular detection area.

7. A method according to any one of claims 1 to 6, **characterized in that** said detection area (3) is rectangular and the emitters (E1, E2) and receivers (R1, R2) are disposed in the vicinity of only one side of said rectangular area.

8. A method according to any one of claims 1 to 7, **characterized in that** the light emitted by the light emitters (9) is ordinary non-coherent light.

9. A method according to claim 8, **characterized in that** the wavelength of the light emitted is in one of the following ranges of wavelengths: UV, visible, infrared.

10. A method according to any one of claims 1 to 9, **characterized in that** said detection area (3) comprises a set of elementary areas (31) each associated with a given function so that any position of the object in an elementary area (31) activates the function associated with that elementary area.

11. An optical detection device for determining the position of an object (5) on a particular detection area (3) of a surface (1), said device comprising, disposed in the vicinity of said particular area (3), and on the same side thereof with respect to the object (5), a plurality of emitters (Ei) adapted to emit light in such a way that it does not hit said surface (1) in the detection area (3) and of receivers (Ri) adapted to cover the detection area (3) and to measure a value representative of the quantity of light reflected by the object (5),

said device comprising control means (19) for turning on said emitter (9) and processor means (21) adapted:

- to obtain and store for at least two different emitter (Ei) - receiver (Ri) pairs the quantity of light reflected by said object (5) and measured by said receiver (Ri) when the object is illuminated by said emitter (Ei),
- to calculate at least two characteristic values (K1, K2) from said measured value by at least one receiver (Ri), and

said device being **characterized in that**:

- the plurality of emitters (Ei) and receivers (Ri) being disposed in an alternating and regular arrangement, said processor means calculates a characteristic value (Ki) by emitter (Ei) by averaging the values measured by the receivers (Ri, Ri+1) on each side of said emitter (Ei) when only said emitter (Ei) is turned on
and **in that** said processor means are further adapted to determine at least one position (x) of the object (5) by directly reading a table (Tx) indexed by said characteristic values (K1, K2), the content of said table (Tx) being predetermined and set before said step of obtaining.

12. An optical detection device for determining the position of an object (5) on a particular detection area (3) of a surface (1), said device comprising, disposed in the vicinity of said particular area (3), and on the same side thereof with respect to the object (5), a plurality of emitters (Ei) adapted to emit light in such a way that it does not hit said surface (1) in the detection area (3) and of receivers (Ri) adapted to cover the detection area (3) and to measure a value representative of the quantity of light reflected by the object (5),
said device comprising control means (19) for turning on said emitter (9) and processor means (21) adapted:

- to obtain and store for at least two different emitter (Ei) - receiver (Ri) pairs the quantity of light reflected by said object (5) and measured by said receiver (Ri) when the object is illuminated by said emitter (Ei),
- to calculate at least two characteristic values (K1, K2) from said measured value by at least one receiver (Ri), and

said device being **characterized in that**:

- the plurality of emitters (Ei) and receivers (Ri) being disposed in an alternating and regular arrangement, said processor means calculates a characteristic value (Ki) by that receiver (Ei) by averaging the values measured by that receiver (Ri) when the emitters (Ei-1, Ei) situated on each side of said receiver (Ri) are turned on successively,

and **in that** said processor means are further adapted to determine at least one position (x) of the object (5) by directly reading a table (Tx) indexed by said characteristic values (K1, K2), the content of said table (Tx) being predetermined and set before said step of obtaining.

13. A device according to claim 11, **characterized in that** the processor means (21) calculate a characteristic value (Ki) for each emitter (Ei) by calculating a function of the values measured by at least three receivers (R1, R2, R3, R4) when only that emitter is turned on, the coefficients of this affine function being a function of the distance between each receiver (Ri) and that emitter (Ei).

14. A device according to any one of claims 11 to 13, **characterized in that** the processor means are adapted to repeat said measurement step (E30) for each of said emitter (Ei) and receiver (Ri) pairs until a stable quantity of reflected light is measured.

15. A device according to any one of claims 11 to 14, **characterized in that** said predetermined table (Tx) is obtained by a polynomial regression method from a number of preliminary measurements effected under the same conditions as apply to said measurement.

16. A device according to any one of claims 11 to 15 wherein said surface (1) is substantially plane, **characterized in that** said emitters (Ei) and receivers (Ri) are disposed in a single line (13) and have respective light emission and reception axes (15, 17) substantially parallel to said particular detection area.

17. A device according to any one of claims 11 to 16, **characterized in that** said detection area (3) is rectangular and the emitters (E1, E2) and receivers (R1, R2) are disposed in the vicinity of only one side of said rectangular area.

18. A device according to any one of claims 11 to 17, **characterized in that** the light emitted by the light emitters is ordinary non-coherent light.

19. A device according to claim 18, **characterized in that** the wavelength of the light emitted is in one of the following ranges of wavelengths: UV, visible, infrared.

20. A device according to any one of claims 11 to 19, **characterized in that** said particular area (3) comprises a set of elementary areas (31) each associated with a given function so that any position of the object in an elementary area (31) activates the function associated with that elementary area.

21. A device according to claim 20, **characterized in that** said particular area corresponds to an input area and each of the elementary areas corresponds to a key.

22. A data input terminal including a device according to any one of claims 11 to 21.

23. The use of a detection method according to any one of claims 1 to 10 or a detection device according to any one of claims 11 to 22 to detect the displacement of an object or to measure the speed of displacement of an object.

**Patentansprüche**

1. Verfahren zur optischen Detektion, um die Position eines Objekts (5) auf einem bestimmten Detektionsbereich (3) einer Fläche (1) zu bestimmen, wobei dieses Verfahren umfaßt:

   - einen vorbereitenden Schritt des Anordnens mehrerer Lichtsender (Ei) und Lichtempfänger (Ri) in der Nähe des Detektionsbereichs (3) und auf derselben Seite bezogen auf das Objekt (5), um den Detektionsbereich (3) abzudecken, wobei jeder Sender (E1, E2) zum Emittieren von Licht derart ausgebildet ist, daß dieses nicht auf der Fläche (1) in dem Detektionsbereich (3) auftrifft, wobei das Verfahren umfaßt:
   - einen Schritt (E30) des Ausführens, für wenigstens zwei verschiedene Paare aus Sender (Ei) und Empfänger (Ri), einer Messung mit dem Empfänger (Ri) der Menge an Licht, welche durch das Objekt (5) reflektiert wird, wenn das Objekt (5) von dem Sender (Ei) beleuchtet wird,
   - einen Schritt (E100) des Berechnens wenigstens zweier charakteristischer Werte (K1, K2) ausgehend von Werten, welche während des vorhergehenden Schritts (E30) der Messung gemessen worden sind, wobei das Verfahren **dadurch gekennzeichnet ist, daß** in dem vorbereitenden Schritt des Anordnens mehrere Sender (Ei) und Empfänger (Ri) alternierend und regelmäßig angeordnet werden und daß (Schritt E100) ein charakteristischer Wert (Ki) pro Sender (Ei) durch Errechnen des Mittelwerts der Werte, welche von den Empfängern (Ri, Ri+1) gemessen werden, die sich auf jeder Seite des Senders (Ei) befinden, wenn nur der Sender (Ei) eingeschaltet ist, berechnet wird und **dadurch**, daß es ferner umfaßt:
   - einen Schritt (E120) des Bestimmens wenigstens einer Position (x) des Objekts (5) durch direktes Ablesen in einer Tabelle (Tx), welche durch die wenigstens zwei charakteristischen Werte (K1, K2) indiziert ist, wobei der Inhalt der Tabelle (Tx) vor dem Schritt (E30) des Messens vorbestimmt und festgesetzt wird.

2. Verfahren zur optischen Detektion, um die Position eines Objekts (5) auf einem bestimmten Detektionsbereich (3) einer Fläche (1) zu bestimmten, wobei dieses Verfahren umfaßt:

   - einen vorbereitenden Schritt des Anordnens mehrerer Lichtsender (Ei) und Lichtempfänger (Ri) in der Nähe des Detektionsbereichs (3) und auf derselben Seite bezogen auf das Objekt (5), um den Detektionsbereich (3) abzudecken, wobei jeder Sender (E1, E2) zum Emittieren von Licht derart ausgebildet ist, daß dieses nicht auf der Fläche (1) in dem Detektionsbereich (3) auftrifft, wobei das Verfahren umfaßt:
   - einen Schritt (E30) des Ausführens, für wenigstens zwei verschiedene Paare aus Sender (Ei) und Empfänger (Ri), einer Messung mit dem Empfänger (Ri) der Menge an Licht, welche durch das Objekt (5) reflektiert wird, wenn das Objekt (5) von dem Sender (Ei) beleuchtet wird,
   - einen Schritt (E100) des Berechnens wenigstens zweier charakteristischer Werte (K1, K2), ausgehend von Werten, welche während des vorhergehenden Schritts (E30) des Messens gemessen worden sind, wobei das Verfahren **dadurch gekennzeichnet ist, daß** in dem vorbereitenden Schritt des Anordnens mehrere Sender (Ei) und Empfänger (Ri) alternierend und regelmäßig angeordnet werden und daß (Schritt E100) ein charakteristischer Wert (Ki) pro Empfänger (Ri) durch Errechnen des Mittelwerts der Werte, welche von dem Empfänger (Ri) gemessen werden, wenn die Empfänger (Ei-1, Ei), die sich auf jeder Seite des Empfängers (Ri) befinden, nacheinander eingeschaltet werden, berechnet wird und **dadurch**, daß es ferner umfaßt:

- einen Schritt (E120) des Bestimmens wenigstens einer Position (x) des Objekts (5) durch direktes Ablesen in einer Tabelle (Tx), welche durch die wenigstens zwei charakteristischen Werte (K1, K2) indiziert ist, wobei der Inhalt der Tabelle (Tx) vor dem Schritt (E30) des Messens vorbestimmt und festgesetzt wird.

3. Verfahren nach Anspruch 1, **gekennzeichnet durch** Berechnen (Schritt E100) eines charakteristischen Werts pro Sender (E1) **durch** Berechnen einer Funktion der Werte, welche **durch** wenigstens drei Empfänger (R1, R2, R3, R4) gemessen werden, wenn nur dieser Sender eingeschaltet ist, wobei die Koeffizienten dieser affinen Funktion eine Funktion der Entfernung sind, die jeden Empfänger von diesem Sender (E1) trennt.

4. Verfahren nach einem der Ansprüche 1 bis 3, **gekennzeichnet durch** Wiederholen, für jedes der Paare aus Sender (Ei) und Empfänger (Ri), des Schritts (E30) des Messens, bis zu einem Messen einer stabilen Menge reflektierten Lichts.

5. Verfahren nach einem der Ansprüche 1 bis 4, **gekennzeichnet durch** Ermitteln der vorbestimmten Tabelle (Tx) **durch** eine Methode der polynomialen Regression, ausgehend von einer Anzahl vorbereitender Messungen, welche unter denselben Bedingungen ausgeführt werden wie der Schritt (E30) des Messens.

6. Verfahren nach einem der Ansprüche 1 bis 5, wobei die Fläche (1) im wesentlichen eben ist, **dadurch gekennzeichnet, daß** in dem vorbereitenden Schritt des Anordnens der Lichtsender (Ei) und der Lichtempfänger (Ri) auf einer einzigen Linie (13), angeordnet werden wobei diese eine Sendeachse (15), beziehungsweise eine Empfangsachse (17) aufweisen, welche im wesentlichen zu dem bestimmten Detektionsbereich parallel ist.

7. Verfahren nach einem der Ansprüche 1 bis 6, **dadurch gekennzeichnet, daß** der Detektionsbereich (3) rechteckig ist und daß die Sender (E1, E2) und die Empfänger (R1, R2) in der Nähe einer einzigen Seite des rechteckigen Bereichs angeordnet sind.

8. Verfahren nach einem der Ansprüche 1 bis 7, **dadurch gekennzeichnet, daß** das Licht, welches durch die Lichtsender (9) emittiert wird, normales nicht kohärentes Licht ist.

9. Verfahren nach Anspruch 8, **dadurch gekennzeichnet, daß** die Wellenlänge des emittierten Lichts in einem Wellenlängenbereich der folgenden Bereiche liegt: UV-Bereich, sichtbarer Bereich und Infrarotbereich.

10. Verfahren nach einem der Ansprüche 1 bis 9, **dadurch gekennzeichnet, daß** der Detektionsbereich (3) eine Anordnung elementarer Bereiche (31) umfaßt, von denen jeder einer gegebenen Funktion, derart zugeordnet wird, daß jede Position des Objekts in einem elementaren Bereich (31) die Funktion aktiviert, welche diesem elementaren Bereich zugeordnet ist.

11. Vorrichtung zur optischen Detektion, um die Position eines Objekts (5) auf einem bestimmten Detektionsbereich (3) einer Fläche (1) zu bestimmen, wobei diese Vorrichtung umfaßt: angeordnet in der Nähe des Detektionsbereichs (3) und auf derselben Seite bezogen auf das Objekt (5) mehrere Lichtsender (Ei), welche zum Emittieren von Licht derart ausgebildet sind, daß dieses nicht auf der Fläche (1) in dem Detektionsbereich (3) auftrifft, und mehrere Lichtempfänger (Ri) zum Abdecken des Detektionsbereichs (3), welche zum Messen eines repräsentativen Werts der Menge an Licht ausgebildet sind, die durch das Objekt (5) reflektiert wird, wobei die Vorrichtung ein Mittel zum Steuern (19) umfaßt, um den Sender (9) einzuschalten, und ein Mittel zum Verarbeiten (21), welches dazu ausgebildet ist,

- für wenigstens zwei verschiedene Paare aus Sender (Ei) und Empfänger (Ri) die Menge an Licht, welche durch das Objekt (5) reflektiert und welche von dem Empfänger (Ri) gemessen wird, wenn das Objekt durch den Sender (Ei) beleuchtet wird, zu erhalten und zu speichern,
- wenigstens zwei charakteristische Werte (K1, K2) ausgehend von Werten, welche von wenigstens einem Empfänger (Ri) gemessen werden, zu berechnen, wobei die Vorrichtung **dadurch gekennzeichnet ist, daß**:
- nachdem die mehreren Sender (E1, E2) und Empfänger (R1, R2) alternierend und regelmäßig angeordnet worden sind, das Mittel zum Verarbeiten (21) einen charakteristischen Wert (Ki) pro Sender (Ei) durch Errechnen des Mittelwerts der Werte, welche von den Empfänger (Ri, Ri+1) gemessen werden, die sich auf jeder Seite des Senders (E1) befinden, wenn nur der Sender (E1) eingeschaltet ist, berechnet
- und daß das Mittel zum Verarbeiten ferner dazu ausgebildet ist, wenigstens eine Position (x) des Objekts (5) durch direktes Ablesen in einer Tabelle (Tx) zu bestimmen, welche durch die wenigstens zwei charakteristischen Werte (K1, K2) indiziert ist, wobei der Inhalt der Tabelle (Tx) vor dem Erhalten vorbestimmt und festgesetzt wird.

**12.** Vorrichtung zur optischen Detektion, um die Position eines Objekts (5) auf einem bestimmten Detektionsbereich (3) einer Fläche (1) zu bestimmen, wobei diese Vorrichtung umfaßt: angeordnet in der Nähe des Detektionsbereichs (3) und auf derselben Seite bezogen auf das Objekt (5) mehrere Lichtsender (Ei), welche zum Emittieren von Licht derart ausgebildet sind, daß dieses nicht auf der Fläche (1) in dem Detektionsbereich (3) auftrifft, und mehrere Lichtempfänger (Ri) zum Abdecken des Detektionsbereichs (3), welche zum Messen eines repräsentativen Werts der Menge an Licht ausgebildet sind, die durch das Objekt (5) reflektiert wird,
wobei die Vorrichtung ein Mittel zum Steuern (19) umfaßt, um den Sender (9) einzuschalten, und ein Mittel zum Verarbeiten (21), welches dazu ausgebildet ist,

- für wenigstens zwei verschiedene Paare aus Sender (Ei) und Empfänger (Ri) die Menge an Licht, welche durch das Objekt (5) reflektiert und welche von dem Empfänger (Ri) gemessen wird, wenn das Objekt durch den Sender (Ei) beleuchtet wird, zu erhalten und zu speichern,
- wenigstens zwei charakteristische Werte (K1, K2) ausgehend von Werten, welche von wenigstens einem Empfänger (Ri) gemessen werden, zu berechnen, wobei die Vorrichtung **dadurch gekennzeichnet ist, daß**:
- nachdem die mehreren Sender (E1, E2) und Empfänger (R1, R2) alternierend und regelmäßig angeordnet worden sind, das Mittel zum Verarbeiten (21) einen charakteristischen Wert (Ki) pro Empfänger durch Errechnen des Mittelwerts der Werte, welche von diesem Empfänger (Ri) gemessen werden, wenn die Sender (Ei-1, Ei), die sich auf jeder Seite des Empfängers (Ri) befinden, nacheinander eingeschaltet werden, berechnet
- und daß das Mittel zum Verarbeiten ferner dazu ausgebildet ist, wenigstens eine Position (x) des Objekts (5) durch direktes Ablesen in einer Tabelle (Tx) zu bestimmen, welche durch die wenigstens zwei charakteristischen Werte (K1, K2) indiziert ist, wobei der Inhalt der Tabelle (Tx) vor dem Erhalten vorbestimmt und festgesetzt wird.

**13.** Vorrichtung nach Anspruch 11, **dadurch gekennzeichnet, daß** die Mittel zum Verarbeiten (21) einen charakteristischen Wert (Ki) pro Sender (Ei) durch Berechnen einer Funktion der Werte berechnen, welche durch wenigstens drei Empfänger (R1, R2, R3, R4) gemessen werden, wenn nur dieser Sender (Ei) eingeschaltet ist, wobei die Koeffizienten dieser affinen Funktion eine Funktion der Entfernung sind, die jeden Empfänger (Ri) von diesem Sender (Ei) trennt.

**14.** Vorrichtung nach einem der Ansprüche 11 bis 13, **dadurch gekennzeichnet, daß** die Mittel zum Verarbeiten dazu ausgebildet sind, für jedes der Paare aus Sender und Empfänger, die Messung der Menge des reflektierten Lichts bis zu einem Erhalten einer stabilen Menge zu wiederholen.

**15.** Vorrichtung nach einem der Ansprüche 11 bis 14, **dadurch gekennzeichnet, daß** die vorbestimmte Tabelle (Tx) durch eine Methode der polynomialen Regression ermittelt wird, ausgehend von einer Anzahl vorbereitender Messungen, welche unter denselben Bedingungen ausgeführt werden wie das Messen.

**16.** Vorrichtung nach einem der Ansprüche 11 bis 15, wobei die Fläche (1) im wesentlichen eben ist, **dadurch gekennzeichnet ist, daß** die Sender (Ei) und die Empfänger (Ri) auf einer einzigen Linie (13) angeordnet sind und daß sie eine Sendeachse (15) beziehungsweise eine Empfangsachse (17) für das Licht aufweisen, welche im wesentlichen parallel ist zu dem bestimmten Detektionsbereich.

**17.** Vorrichtung nach einem der Ansprüche 11 bis 16, **dadurch gekennzeichnet, daß** der Detektionsbereich (3) rechteckig ist und daß die Sender (E1, E2) und die Empfänger (R1, R2) in der Nähe einer einzigen Seite des rechteckigen Bereichs angeordnet sind.

**18.** Vorrichtung nach einem der Ansprüche 11 bis 17, **dadurch gekennzeichnet, daß** das Licht, welches durch die Lichtsender emittiert wird, normales nicht kohärentes Licht ist.

**19.** Vorrichtung nach Anspruch 18, **dadurch gekennzeichnet, daß** die Wellenlänge des emittierten Lichts in einem Wellenlängenbereich der folgenden Bereiche liegt: UV-Bereich, sichtbarer Bereich und Infrarotbereich.

**20.** Vorrichtung nach einem der Ansprüche 11 bis 19, **dadurch gekennzeichnet, daß** der bestimmte Bereich eine Anordnung elementarer Bereiche (31) umfaßt, von denen jeder einer gegebenen Funktion derart zugeordnet ist, daß jede Position des Objekts in einem elementaren Bereich das Aktivieren der Funktion ermöglicht, welche diesem elementaren Bereich zugeordnet ist.

**21.** Vorrichtung nach Anspruch 20, **dadurch gekennzeichnet, daß** der bestimmte Bereich einem Erfassungsbereich entspricht, und jeder der elementaren Bereiche einer Taste entspricht.

**22.** Datenerfassungsterminal, welches eine Vorrichtung nach einem der Ansprüche 11 bis 21 umfaßt.

**23.** Verwendung eines Verfahrens zur Detektion nach einem der Ansprüche 1 bis 10 oder einer Vorrichtung zur Detektion nach einem der Ansprüche 11 bis 22, zum Detektieren der Bewegung eines Objekts oder zum Messen der Geschwindigkeit der Bewegung eines Objekts.

FIG. 1

EP 1 660 984 B1

20

FIG. 2A

FIG. 2B

FIG. 2C

FIG. 3

FIG. 5

```
         ┌─────────────────────────┐
         │   Charger les valeurs   │────── E10
         └─────────────────────────┘
                      │
                      ▼
         ┌─────────────────────────┐
    ┌───▶│   Allumer un émetteur    │────╮  E20
    │    └─────────────────────────┘
    │                 │
    │                 ▼
    │    ┌─────────────────────────┐
    │    │    Mesurer signaux sur   │────╮  E30
    │    │    récepteurs associés   │
    │    └─────────────────────────┘
    │                 │
    │                 ▼
    │    ┌─────────────────────────┐
    │    │    Éteindre émetteur     │────╮  E40
    │    └─────────────────────────┘
    │                 │
    │                 ▼
    │    ┌─────────────────────────┐
    │    │  Calculer signaux de base │───╮  E60
    │    └─────────────────────────┘
    │  OUI            │
    │◀────────◇  Autre émetteur ?  ◇────  E70
    │                 │ NON
    │                 ▼
    │    ┌─────────────────────────┐
    │    │  Calculer signaux utiles │────╮  E80
    │    └─────────────────────────┘
    │  NON            │
    │◀────────◇   Signal stable ?  ◇────  E90
    │                 │ OUI
    │                 ▼
    │    ┌─────────────────────────┐
    │    │     Calculer valeurs     │────╮  E100
    │    │     caractéristiques     │
    │    └─────────────────────────┘
    │                 │
    │                 ▼
    │    ┌─────────────────────────┐
    │    │   Déterminer position    │────╮  E120
    │    └─────────────────────────┘
    │                 │
    │                 ▼
    │    ┌─────────────────────────┐
    │    │    Déterminer touche     │────╮  E130
    │    └─────────────────────────┘
    │                 │
    │                 ▼
    │    ┌─────────────────────────┐
    └────│    Transmettre touche    │──── E140
         └─────────────────────────┘
```

**FIG. 4**

FIG. 6

FIG. 7

**EP 1 660 984 B1**

**RÉFÉRENCES CITÉES DANS LA DESCRIPTION**

**Documents brevets cités dans la description**

- FR 2443173
- US 4986662 A
- EP 1039365 A
- EP 1168233 A